# EUROPÄISCHE PATENTSCHRIFT

(11) **EP 0 357 549 B1**
(45) Veröffentlichungstag und Bekanntmachung des Hinweises auf die Patenterteilung: **07.01.1993**
(21) Anmeldenummer: 89810564.8
(22) Anmeldetag: 24.07.1989
(51) Int. Cl.: B26D 7/26, B02C 18/18, B23C 5/22, B27G 13/04

(54) **Schneidrotor**
Rotorknife
Couteaux rotatifs

(30) Priorität: 02.09.1988 CH 3297/88
(43) Veröffentlichungstag der Anmeldung: 07.03.1990
(73) Patentinhaber: Bidurit Hartmetall AG, CH-2504 Biel (CH)
(72) Erfinder: Stampfli, Peter, CH-4705 Walliswil - bei Bipp (CH); Frey, Peter, CH-3054 Schüpfen (CH)
(74) Vertreter: AMMANN INGENIEURS-CONSEILS EN PROPRIETE INTELLECTUELLE SA BERNE

(56) Entgegenhaltungen:
- EP-A- 0 175 053
- EP-A- 0 182 037
- DE-A- 2 120 491
- DE-A- 3 301 919
- DE-A- 3 511 580
- Prospekt "Widia-Schneidrotor", Krupp Widia Schweiz, Biel

## Beschreibung

Die vorliegende Erfindung betrifft einen Schneidrotor mit in Nuten eines Rotorkörpers eingespannten Messern gemäss dem Oberbegriff des Anspruchs 1. Ein derartiger Schneidrotor ist aus der EP-A-0 182 037 (Fig. 5 und 6) bekannt. Die Messer sitzen dabei in Schwalbenschwanznuten und werden mittels Spreizhülsen von innen gegen die Flanken der Schwalbenschwanznuten gespannt. Die Spreizhülsen sind an ihren Enden mit Gewinden versehen, mit welchen die Schrauben verschraubt sind. Diese Lösung ist aufwendig, da hinterschnittene Schwalbenschwanznuten und Messer mit entsprechendem Profil erforderlich sind. Die Vorrichtung gestattet ausschliesslich ein Festspannen der Messer aber keine Feineinstellung derselben.

Ziel vorliegender Erfindung ist es nun, bei einfacher Herstellung einen guten Halt der Messer und zusätzlich eine Einstellbarkeit zu ermöglichen. Dieses Ziel wird gemäss dem Kennzeichen des Anspruchs 1 erreicht. Die Nuten bzw. Messer können in diesem Falle einen einfachen, prismatischen Querschnitt mit parallelen Flanken aufweisen. Die Spannflächen der Messer brauchen keine hohe Präzision aufzuweisen und können bei Messern aus Hartmetall direkt bei der Herstellung die endgültige Form erhalten. Durch Einstellen der axialen Lage der Schrauben kann die axiale Lage der Messer fein eingestellt werden.

Die Erfindung wird nun anhand eines Ausführungsbeispiels und einer Ausführungsvariante näher erläutert.
Figur 1 ist eine Teilstirnansicht des Schneidrotors,
Figur 2 ist eine Seitenansicht, teilweise im Schnitt und
Figur 3 ist eine Teil-Stirnansicht entsprechend Figur 1 einer Ausführungsvariante.

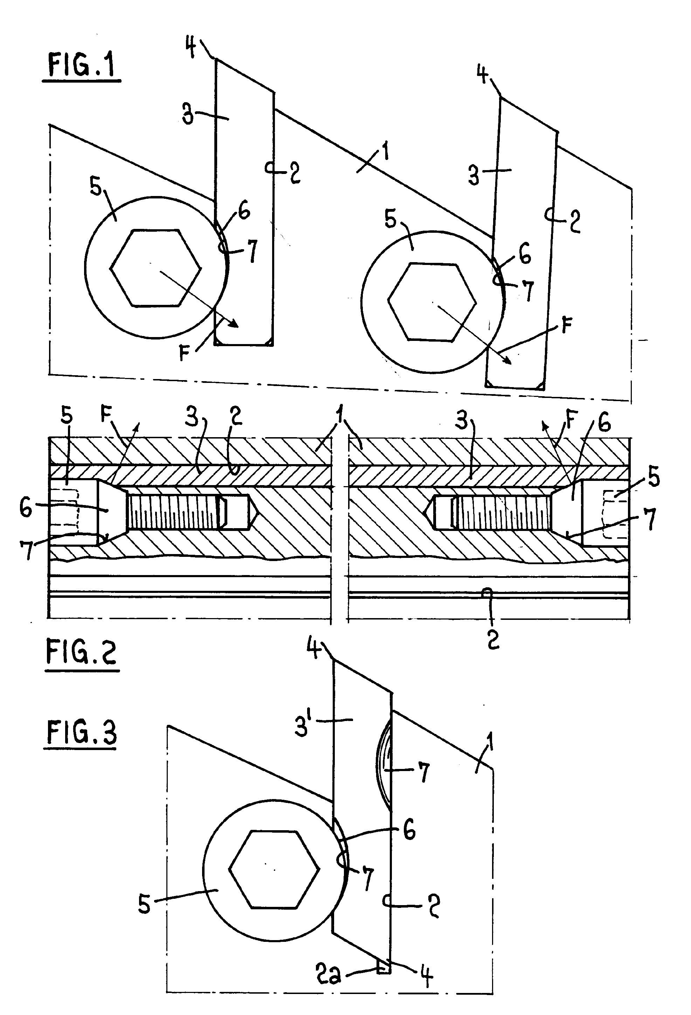

Figur 1 zeigt einen kleinen Ausschnitt aus dem Umfangsbereich des Schneidrotors. In den Rotorkörper 1 sind am Umfang in möglichst engem Abstand von beispielsweise 17 bis 20 mm prismatische Nuten 2 eingefräst, von welchen jede ein Messer 3 mit einer Schneide 4 aufnimmt. An beiden Stirnseiten des Rotors ist jedem Messer 3 eine Spannschraube 5 zugeordnet, von welchen in Figur 1 nur die Köpfe sichtbar sind. Wie Figur 2 zeigt, weisen diese mit dem Rotorkörper 1 verschraubten Spannschrauben 5 eine konische Spannfläche 6 auf, die mit einer zugeordneten konkaven Spannfläche 7 am Messer 3 zusammenwirkt. Jedes Messer 3 weist also an beiden Enden eine entsprechende konkave Spannfläche 7 auf, gegen welche der Konus 6 einer Spannschraube 5 anliegt. Die Spannflächen 7 können zylindrische Spannflächen sein, deren Neigung dem Neigungswinkel des Konus 6 entspricht, so dass jeder Konus 6 längs einer Mantelline der Spannfläche 7 auf dieselbe aufliegt. Wie Figur 1 zeigt, liegen im montierten Zustand die konischen Flächen 6 etwas exzentrisch bezüglich der Spannflächen 7, der Messer 3. In Figur 1 ist angenommen, dass diese Berührungs- Mantellinie etwa in der links liegenden Seitenfläche des Messers 3 liegen, so dass die vom Spannkonus 6 auf die Spannfläche 7 ausgeübte Spannkraft F etwa die in Figur 1 eingetragene Richtung hat. Wenn eine der in Fig. 1 sichtbaren Konusschrauben 5 angezogen wird, wirkt die von ihrer konischen Fläche 6 auf die anliegende Spannfläche 7 wirkende Reibungskraft im wesentlichen radial nach innen und unterstützt die Keilwirkung im gewünschten Sinne. Die an der gegenüberliegenden, hinteren Stirnseite des Rotors liegenden Konusschrauben müssen, um denselben Effekt zu erzielen, Linksgewinde aufweisen. Diese Spannkraft hat jedoch auch eine Komponente in Längsrichtung der Messer beziehungsweise in Axialrichtung der Messer 3, wie in Figur 2 angedeutet. Die Messer werden somit durch die Konusschrauben 5 in eindeutiger Lage gehalten, indem sie mit ihren genau bearbeiteten Flächen in Umfangsrichtung nach rechts in Figur 1 und nach innen gegen die Nutenwand beziehungsweise den Nutengrund gepresst werden. Zudem sind sie axial gesichert, weil die Konusschrauben auch jede Axialverschiebung verhindern. Die Messer 3 sitzen praktisch spielfrei in den Nuten 2, so dass am Umfang des Rotors keinerlei Verunreinigungen eindringen können. Es ist daher praktisch ausgeschlossen, dass die Spannelemente irgendwie verunreinigt werden könnten, derart, dass ein Lösen derselben und ein Ausbau der Messer zum Ersatz erschwert sein könnte.

Die Messer 3 bestehen vorzugsweise aus Hartmetall, insbesondere einem Hartmetall mit Nickel oder einer Nickellegierung wie Nickelchrom, Nickelmolybdän oder Nickeltitan als Bindemetall. Die Spannflächen 7 der Messer brauchen keine sehr hohe Präzision aufzuweisen, denn es ist nicht sehr kritisch, in welcher genauen Richtung die Spannkraft F wirkt. Wichtig ist jedoch, dass die Flächen genügend genau sind um eine gleichmässige gegenseitige Auflage längs einer Mantellinie der konischen Flächen 6 auf die Spannflächen zu gewährleisten, damit keine übermässigen Beanspruchungen im Hartmetallmesser auftreten. Die beim Sintern der Hartmetallmesser erzielbare Genauigkeit der Spannflächen 7 genügt jedoch praktisch durchaus, d.h. eine Nachbearbeitung dieser Spannflächen ist nicht erforderlich. Die Herstellung der Messer wird daher infolge der Spannflächen 7 praktisch nicht verteuert, und im übrigen ist die Messerform sehr einfach, indem die Längsseiten planparallel geschliffen werden können mit einer Bearbeitungszugabe von beispielsweise 2/10 mm. Ein besonderer Vorteil der dargestellten Ausführung besteht in der Möglichkeit, durch dosiertes Spannen der beiden je einem Messer 3 zugeordneten Konusschrauben 6 die axiale Lage des Messers fein einzustellen.

In Figur 3, die eine Ausführungsvariante zeigt, sind entsprechende Teile gleich bezeichnet wie in Figur 1. Der Unterschied besteht darin, dass im Gegensatz zur Ausführung gemäss Figur 1 Wendemesser 3′ vorgesehen sind. Sie weisen symmetrischen Querschnitt mit zwei Schneiden 4 auf. Die Nuten 2 haben in diesem Falle einen anderen Querschnitt auf, wobei der Nutengrund entsprechend der Freifläche des Messers geneigt ist. Im Bereiche der innen liegenden Schneide 4 des Messers 3′ weist die Nut 2 einer Vertiefung 2a auf, damit die Schneide 4 auf jeden Fall unbeschädigt bleibt. Das Wendemesser weist an jedem Ende 2 symmetrisch liegende Spannflächen 7 auf. Nach Abnützung der aussen liegenden Schneide 4 kann das Messer 3′ ausgebaut, gewendet und wieder eingesetzt werden.

## Patentansprüche

1. Schneidrotor mit in Nuten (2) eines Rotorkörpers (1) eingespannten Messern (3,3′), wobei als Spannelemente Schrauben (5) mit einer etwa parallel zur Schneide (4) des Messers (3,3′) bzw. zur Rotorachse liegenden Achse vorhanden sind, mittels welchen auf das Messer Spannkräfte in radialer und tangentialer Richtung ausgeübt werden, dadurch gekennzeichnet, dass die Schrauben (5) mit dem Rotorkörper (1) verschraubt sind und einen sich vom Kopf zum Gewindeschaft verjüngenden Konus (6) aufweisen, dass der Konus (6) jeder Schraube gegen eine konkave Spannfläche (7) eines Messers (3,3′) anliegt, wobei die Achse der Schraube (5) bzw. des Konus (6) etwa parallel zur Schneide (4) des Messers bzw. zur Rotarachse liegt, und wobei der Konus (6) derart exzentrisch an der Spannfläche (7) anliegt, dass auf das Messer (3,3′) eine Spannkraft (F) mit einer auf die Rotorachse bezogen radialen, einer axialen und einer tangentialen Komponente wirkt.

2. Schneidrotor nach Anspruch 1, dadurch gekennzeichnet, dass je eine Schraube (5) mit ihrem Konus (6) auf jedes Ende des Messers (3) an den Stirnseiten des Rotors (1) wirkt.

3. Schneidrotor nach Anspruch 1 oder 2, gekennzeichnet durch Hartmetall-Messer mit Nickel, Nickelchrom, Nickelmolybdän oder Nickeltitan als Bindemetall.

4. Schneidrotor nach einem der Ansprüche 1 bis 3, dadurch gekennzeichnet, dass als Messer Wendemesser (3′) mit symmetrisch angeordneten Schneiden (4) und Spannflächen (7) vorgesehen sind.

5. Schneidrotor nach einem der Ansprüche 1 bis 4, dadurch gekennzeichnet, dass zylindrische oder konische Spannflächen (7) vorgesehen sind, wobei der Konus (6) mit einer Mantellinie an der Spannfläche (7) anliegt.

6. Schneidrotor nach einem der Ansprüche 1 bis 5, dadurch gekennzeichnet, dass die Spannflächen (7) unbearbeitete Flächen von Hartmetall-Messern (3,3′) sind.

7. Schneidrotor nach einem der Ansprüche 1 bis 6, dadurch gekennzeichnet, dass die Schrauben (5) an einer der beiden Stirnseiten des Rotors Rechts- und an der anderen Stirnseite Linksgewinde aufweisen, derart, dass ihre Reibkräfte beim Festziehen im wesentlichen radial einwärts auf das Messer (3) wirken.

## Claims

1. Cutting rotor with blades (3,3′) fixed in grooves (2) of a rotor body (1), the fixing elements being screws (5) with an axis parallel to the cutting edge (4) of the blade (3), resp. to the axis of the rotor, by means of which fixing forces in the radial and tangential direction may be exerted on the blade, characterized in that the screws (5) are screwed to the rotor body (1) and in that they comprise a cone (6) decreasing from the head to the threaded axis, in that the cone (6) of each screw lies against a concave fixing surface (7) of a blade (3,3′), the axis of the screw (5), resp. of the cone (6) lying in a parallel direction to the cutting edge (4) of the blade, resp. to the axis of the rotor and in that the cone (6) lies excentrically on the fixing surface (7) in such a way that a fixing force (F) acts on the blade (3,3′) with a radial, axial and tangential component relatively to the axis of the rotor.

2. Rotor according to claim 1, characterized in that each of the screws (5) acts with its cone (6) on each extremity of the blade (3) at the frontal part of the rotor (1).

3. Rotor according to claim 1 or 2, characterized by a blade of hard metal with nickel, chrome-nickel, molybden nickel or titane nickel as binding metal.

4. Rotor according to one of the claims 1 to 3, characterized in that instead of common blades, there is provided reversing blades (3′) with symmetrical cutting edges (4) and fixing surfaces (7).

5. Rotor according to one of the claims 1 to 4, characterized in that cylindrical or conical fixing surfaces (7) are provided, the cone (6) lying by one generating line on the fixing surface.

6. Rotor according to one of the claims 1 to 5, characterized in that the fixing surfaces (7) are non worked surfaces of hard metal blades (3,3′)

7. Rotor according to one of the claims 1 to 6, characterized in that the screws (5) comprise righthand thread to one of both front faces of the rotor and lefthand thread at the other front face, such that their frictional forces, at the time of fixing, act essentially radially toward the inside on the blade (3).

## Revendications

1. Rotor à découper avec des couteaux (3,3′) serrés dans des gorges (2) d'un corps de rotor (1), les éléments de serrage étant des vis (5) avec un axe parallèle au tranchant (4) du couteau (3,3′), resp. à l'axe du rotor, à l'aide desquelles des forces de serrage en direction radiale et tangentielle peuvent être exercées sur le couteau, caractérisé en ce que les vis (5) sont vissées au corps du rotor (1) et qu'elles comportent un cône (6) diminuant de la tête jusqu'à l'axe fileté, en ce que le cône (6) de chaque vis repose contre une surface de serrage concave (7)d'un couteau (3,3′), l'axe de la vis (5), resp. du cône (6) reposant environ parallèlement au tranchant (4)) du couteau, resp. à l'axe du rotor, et en ce que le cône (6) repose excentriquement sur la surface de serrage (7) de manière telle qu'une force de serrage (F) agisse sur le couteau (3,3′) avec une composante radiale, axiale et tangentielle, relativement à l'axe du rotor.

2. Rotor selon la revendication 1, caractérisé en ce que chacune des vis (5) agit avec son cône (6) sur chaque extrémité du couteau (3) à la partie frontale du rotor (1).

3. Rotor selon la revendication 1 ou 2, caractérisé par un couteau en métal dur avec nickel, chrome-nickel, molybdène nickel ou titane-nickel comme métal de liaison.

4. Rotor selon l'une des revendications 1 à 3, caractérisé en ce qu'en guise de couteau des couteaux renversables (3′) avec des tranchants (4) et surfaces de serrage (7) symétriques sont prévus.

5. Rotor selon l'une des revendications 1 à 4, caractérisé en ce que des surfaces de serrage (7) cylindriques ou coniques sont prévues, le cône (6) reposant par une génératrice sur la surface de serrage (7).

6. Rotor selon l'une des revendications 1 à 5, caractérisé en ce que les surfaces de serrage (7) sont des surfaces non travaillées de couteaux en métal dur (3,3′),

7. Rotor selon l'une des revendications 1 à 6, caractérisé en ce que les vis (5) ont des pas à droite à l'une des deux faces frontales du rotor et à l'autre face frontale un pas à gauche, de manière que leurs forces de frottement, lors du serrage, agissent pour l'essentiel radialement vers l'intérieur sur le couteau (3).
